# EUROPÄISCHE PATENTSCHRIFT

(11) **EP 1 430 238 B1**
(45) Veröffentlichungstag und Bekanntmachung des Hinweises auf die Patenterteilung: **06.07.2005**
(21) Anmeldenummer: 02772243.8
(22) Anmeldetag: 30.08.2002
(51) Int. Cl.: F16H 15/38

(54) **TOROIDGETRIEBE MIT VERSTELLEINRICHTUNG**
TOROIDAL GEARBOX WITH ADJUSTER DEVICE
ENGRENAGE TOROIDAL POURVU D'UN DISPOSITIF DE REGLAGE

(30) Priorität: 29.09.2001 DE 10148399
(43) Veröffentlichungstag der Anmeldung: 23.06.2004
(73) Patentinhaber: ZF FRIEDRICHSHAFEN Aktiengesellschaft, 88038 Friedrichshafen (DE)
(72) Erfinder: STROPH, Stephan, 88069 Tettnang (DE); WAFZIG, Jürgen, 88097 Eriskirch (DE)
(86) Internationale Anmeldenummer: PCT/EP2002/009714
(87) Internationale Veröffentlichungsnummer: WO 2003/029689

(56) Entgegenhaltungen:
- EP-A- 0 413 342
- EP-A- 0 874 178
- DE-A- 4 444 952
- DE-A- 19 851 092

## Beschreibung

Die vorliegende Erfindung bezieht sich auf ein Toroidgetriebe, insbesondere ein Toroidgetriebe in Drei-Roller-Bauweise gemäß dem Oberbegriff des Patentanspruchs 1.

Ein solches Getriebe ist z.B. aus DE-C-4 444 952 oder EP-A-0 413 342 bekannt.

Ein derartiges Toroidgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt. Dabei ist die Drehzahl der Reibräder um so höher, je größer der Abstand zwischen dieser Berührungsstelle mit der Eingangsscheibe und der Drehachse ist. Die Drehzahl der Ausgangsscheibe hingegen ist um so größer je näher die Berührungsstelle zwischen Reibrad und Ausgangsscheibe an der Drehachse liegt. Durch Verschwenken der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verstelleinrichtung ansteuerbar ist.

Heutzutage werden vielfach Toroidgetriebe in Drei-Roller-Bauweise eingesetzt, da durch eine erhöhte Anzahl an Reibrollen die Belastung auf jede einzelne Reibrolle vermindert werden kann. Hierfür sind zwischen der Eingangs- und Ausgangsscheibe drei Reibräder vorgesehen, die von Radträgern gestützt werden. Drei y-förmige Schwenkglieder sind drehbar auf einem dreigliedrigen Stern gelagert, der mit einem Gehäuse des Getriebes verbunden ist. Jeder der Radträger ist mit zwei Schwenkgliedern gekoppelt, d. h. er ist mit einem Ende an einem Arm eines ersten Schwenkgliedes und mit dem anderen Ende an einen Arm eines zweiten Schwenkgliedes beweglich verbunden. Ein Wechsel in ein gewünschtes Übersetzungsverhältnis wird durch Schwenken der Schwenkglieder eingeleitet, wodurch die Radträger gekippt werden und die Reibräder sich relativ zur Eingangs- und Ausgangsscheibe neigen.

Zum Steuern der Reibräder kann ein hydraulisches Steuersystem verwendet werden. Hierfür ist jeder Radträger mit einem Hydraulikkolben verbunden, der über ein Hydrauliksystem verstellbar ist, sodass eine Kraft auf die Träger ausgeubt und eine Reibradneigung hervorgerufen werden kann.

Bei herkömmlichen Toroidgetrieben sind die Reibräder in den Radträgern jeweils durch Stützwellen gelagert. Dabei steht jede der Stützwellen in eine Mittelbohrung vor, die in dem jeweiligen Reibrad ausgebildet ist, und weist einen exzentrischen Bereich auf, der in eine Bohrung hervorsteht, die in dem jeweiligen Radträger ausgebildet ist. Zum radialen Stützen der Stützwelle in dem Bereich der Mittelbohrung und in dem exzentrischen Bereich sind jeweils Nadellager vorgesehen. Zur Aufnahme eines radial auswärts gerichteten Drucks entlang der Stützwelle sind in einem äußeren Bereich der Reibräder Kugellager angeordnet.

Durch die starken Stellmomente beim Verändern der Drehzahlverhältnisse, die hohen Anpresskräfte, die zur Übertragung der Drehmomente notwendig sind und die Elastizität der verwendeten Bauteile, werden hohe Anforderungen an die Verbindung zwischen den Radträgern und den Schwenkgliedern gestellt. Ein Teil der erforderlichen Ausgleichsbewegung kann über den Exzenter und das Nadellager des Radträgers oder durch die Schwenkverbindung der Schwenkglieder erbracht werden. Ein weiterer Teil muss jedoch von der Lagerung des Radträgers an dem Schwenkglieder erbracht werden.

Aus der DE 44 44 952 C2 ist beispielsweise ein Toroidgetriebe mit drei Antriebsrollen bekannt, die relativ zueinander mit gleichen Anfangsabständen um eine Hauptwelle gruppiert sind und durch Rollenstützglieder drehbar abgestützt sind. Die Rollenstützglieder sind so ausgebildet, dass sie sich in Richtung entlang eigener Schwenkachsen erstrecken. Jede der Schwenkachsen ist senkrecht zu der Drehachse einer korrespondierenden Antriebsrolle. Jeweils benachbarte Enden der drei Rollenstützglieder sind miteinander durch L-förmige Koppelglieder verbunden, und zwar drehbar und schrägstellbar über Kugelgelenke. Jedes Koppelglied ist in seinem Mittelabschnitt drehbar gelagert an einem Zwischenabschnitt eines korrespondierenden Armes eines gemeinsamen sternförmigen Koppelstützgliedes. Das Koppelstützglied ist an dem Getriebegehäuse befestigt.

In der EP 0 413 342 B1 ist ein Toroidgetriebe gezeigt, dass drei peripher beabstandete Reibrollen aufweist, die zwischen den torischen Flächen der Eingangs- und Ausgangsscheiben angeordnet sind und in Antriebskontakt mit diesen stehen. Die Reibrollen werden durch Rollenträger gestützt, die an Schwenkgliedern angeordnet sind, die durch das Gehäuse drehbar gestutzt werden. Jedes der Schwenkglieder weist zwei Arme auf, wobei jeder Arm mit einem der angrenzenden Rollenträger gekoppelt ist. Hierfür ist ein gewölbter Ring zwischen dem vorderen Endbereich des Rollenträgers und der Wand einer Bohrung angeordnet, die in dem angrenzenden Arm eines zugehörigen Schwenkgliedes ausgebildet ist. Dadurch entsteht eine Schwenkverbindung zwischen dem Arm des Schwenkgliedes und dem zugehörigen Rollenträger. Zwischen dem Innenumfang des gewölbten Ringes und dem Endbereich des Rollenträgers ist ein Nadellager angeordnet, um eine Gleitbewegung des Rollenträgers zu ermöglichen. Dadurch entsteht eine verschiebbare Verbindung zwischen jedem der Arme und den zugehörigen Rollenträgern.

Es ist die Aufgabe der vorliegenden Erfindung, ein Toroidgetriebe zu schaffen, bei dem die Verbindung zwischen Reibradträger und Schwenkglied eine verbesserte Ausgleichsbewegung für die angreifenden Kräfte zulässt, das wenige Bauteile erfordert, die Lebensdauer der Bauteile verlängert und kostengünstig herzustellen ist.

Ausgehend von einem Toroidgetriebe der eingangs näher genannten Art erfolgt die Lösung dieser Aufgabe mit den im Patentanspruch 1 angegebenen Merkmalen.

Erfindungsgemäß ist demnach vorgesehen, dass die Radträger der Reibräder mit den Schwenkgliedern durch ein Koppelelement verbunden sind. Das Koppelelement weist eine Kugelführung mit einem Langloch auf, um eine Bewegung in linearer Richtung entlang der Achse des zugehörigen Radträgers zu ermöglichen.

Durch das erfindungsgemäße Koppelelement erfolgt eine Ausgleichsbewegung linear entlang der Achse eines Radträgers und nicht wie bisher auf einer Kurvenbahn, die durch eine exzentrische Lagerung der Reibräder verursacht wird. Instabilitäten im Verstellverhalten können dadurch vermieden werden. Der Exzenter und der zugehörige Nadelkäfig in den Radträgern sind nicht mehr erforderlich. Dadurch können Bauteile und Arbeitsschritte eingespart werden, wodurch sich die Kosten für das Toroidgetriebe senken. Insgesamt erhöht sich die Stabilität des Verstellverhaltens des Getriebes.

In einer bevorzugten Ausführungsform der Erfindung wird das Koppelelement in einem Toroidgetriebe in Drei-Roller-Bauweise einsetzt. Auch bei diesem Getriebetyp, bei dem die Reibräder in einem Winkel von ca. 120° zueinander angeordnet sind, ist das erfindungsgemäße Koppelelement verwendbar.

Wie oben beschrieben wird die Auslenkbewegung der Reibräder primär über die Hydraulikeinrichtung synchronisiert. Eine sekundäre Synchronisation kann bei der vorliegenden Erfindung durch die Koppelelemente über Bolzen erfolgen, die seitlich an die Fläche der Langlöcher kraftschlüssig angepresst werden.

Durch die erfindungsgemäß vorgesehenen Langlöcher in den Koppelelementen können durch Fertigung und Montage entstehende Toleranzen ausgeglichen werden.

Im folgenden wird die Erfindung anhand der Zeichnung naher erläutert.

Es zeigen:
- Fig. 1: eine Schnittansicht eines Toroidgetriebes nach dem Stand der Technik;
- Fig. 2: eine Schnittansicht eines Toroidgetriebes gemäß der vorliegenden Erfindung und
- Fig. 3: einen Schnitt durch eine Detail-Ansicht eines Koppelelementes gemäß der vorliegenden Erfindung.

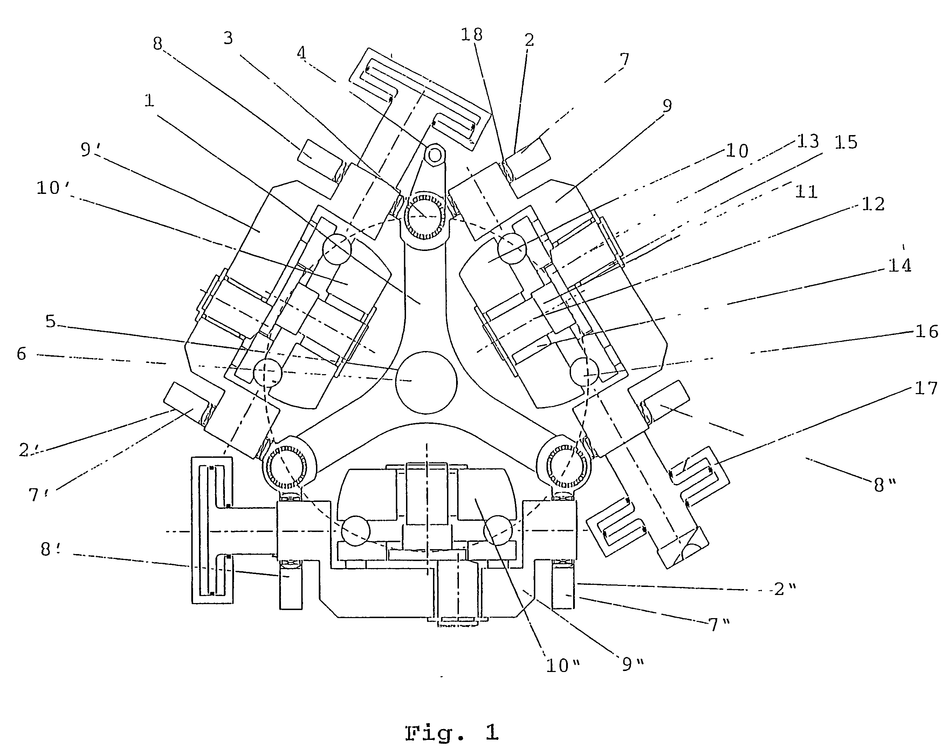

In Fig. 1 ist ein Toroidgetriebe in Drei-Roller-Bauweise nach dem Stand der Technik gezeigt. Das Getriebe weist koaxiale Eingangs- und Ausgangsscheiben mit torischen Flächen auf. Die Scheiben sind schematisch durch die gestrichelte Linie gezeigt.

An einem sternförmigen Stützelement 1 sind drei V-förmige Schwenkglieder 2, 2' und 2" durch Führungsachsen 3 angeordnet. Im Bereich einer Führungsachse 3 ist das sternförmige Stützelement 1 durch eine Schraube 4 am Gehäuse des Getriebes befestigt. Durch eine Mittelöffnung 5 des Stützelementes 1 erstreckt sich eine Scheibenstützwelle 6. Jedes der V-förmigen Schwenkglieder 2, 2' und 2" weist zwei Arme 7, 7', 7 " und 8, 8', 8'' auf. Zwischen jeweils zwei Armen benachbarter Schwenkglieder sind Radträger 9, 9' und 9" angeordnet, die Reibrader 10, 10' und 10'' stützen. Beispielsweise ist zwischen dem Arm 7 des Schwenkelementes 2 und dem Arm 8" des Schwenkelementes 2" der Radträger 9 gelagert.

Das Reibrad 10 ist durch eine Stützwelle 11 an dem Radträger 9 angeordnet. Die Stützwelle 11 ist durch eine Mittelbohrung 12 in dem Reibrad 10 und durch eine exzentrische Bohrung 13 in dem Radträger 9 geführt. Zwischen der Stützwelle 11 und dem Reibrad 10 ist in der Mittelbohrung 12 ein Nadellager 14 und zwischen der Stutzwelle 11 und dem Radträger 9 ist in der exzentrischen Bohrung 13 ein Nadellager 15 vorgesehen. Das Reibrad 10 weist am Rand zur Abstützung ein Kugellager 16 auf. Die beiden übrigen Reibräder 10' und 10" sind auf analoge Weise zwischen den Armen 7' und 8 bzw. den Armen 7" und 8' der entsprechenden Schwenkglieder angeordnet. Bei einer Bewegung der Radträger 9, 9' und 9" in eine Umfangsrichtung der Eingangs- und Ausgangsscheibe werden die Radträger 9, 9' und 9" gekippt und eine Neigung der Reibräder 10, 10' und 10" gegenüber der Eingangs- und Ausgangsscheibe entsteht.

Jeder Radträger 9, 9' und 9" weist einen Hydraulikkolben 17 auf, der in radialer Richtung jeweils auf einer den Armen 8, 8' und 8" gegenüberliegenden Seite angeordnet ist. Beispielsweise ist der Hydraulikkolben 17 des Radträgers 9, der an einer Seite des Armes 8" des Schwenkelementes 2" angeordnet ist auf der gegenüberliegenden anderen Seite des Armes 8'' vorgesehen. Die Hydraulikkolben werden über eine Hydraulikeinrichtung gesteuert, um eine stufenlose Übersetzungsänderung durch das Toroidgetriebe zu erzielen.

In den Armen 7, 7', 7 " und 8, 8' und 8'' der Schwenkelemente 2, 2' und 2" sind Bohrungen 18 vorgesehen, die die Radträger 9, 9' und 9'' aufnehmen. Zur Bildung einer verstellbaren Verbindung wird hierfür beim Stand der Technik z. B. ein Nadellager oder ein Kugellager verwendet.

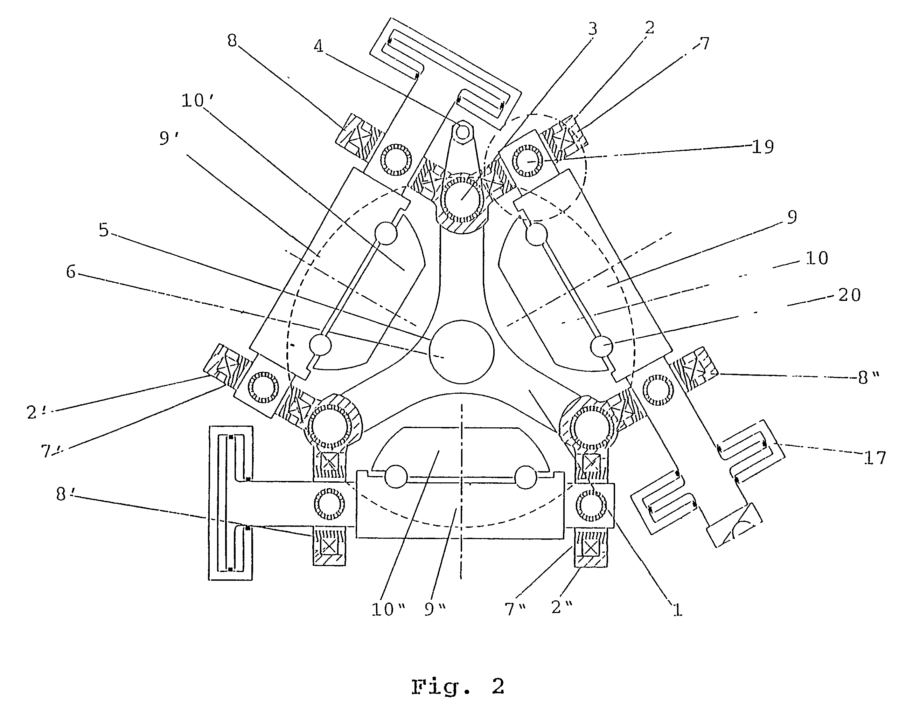

In Fig. 2 ist ein stufenloses Toroidgetriebe gemäß der vorliegenden Erfindung dargestellt. Bauteile, die mit den bisher beschriebenen übereinstimmen, werden dort mit gleichen Bezugszeichen beziffert. An einem sternförmigen Stützelement 1 sind drei Schwenkglieder 2, 2' und 2'' angeordnet, zwischen dessen Armen 7, 7', 7'' und 8, 8', 8" an Radträgern 9, 9' und 9'' Reibräder 10, 10' und 10" angeordnet sind. Die Radträger 9, 9' und 9'' sind durch erfindungsgemäße Koppelelemente 19 an den Armen der Schwenkglieder verstellbar angeordnet. Durch den Einsatz dieser Koppelelemente ist für die Lagerung der Reibräder eine Stützwelle 11, wie sie in Fig. 1 beim Stand der Technik vorgesehen ist, nicht mehr notwendig. Bei der vorliegenden Erfindung sind die Reibräder 10, 10' und 10'' z. B. durch Kugellager 20 beweglich an ihren jeweiligen Radträgern 9, 9' und 9" angeordnet. Dadurch können Bauteile gespart und die Fertigung vereinfacht werden.

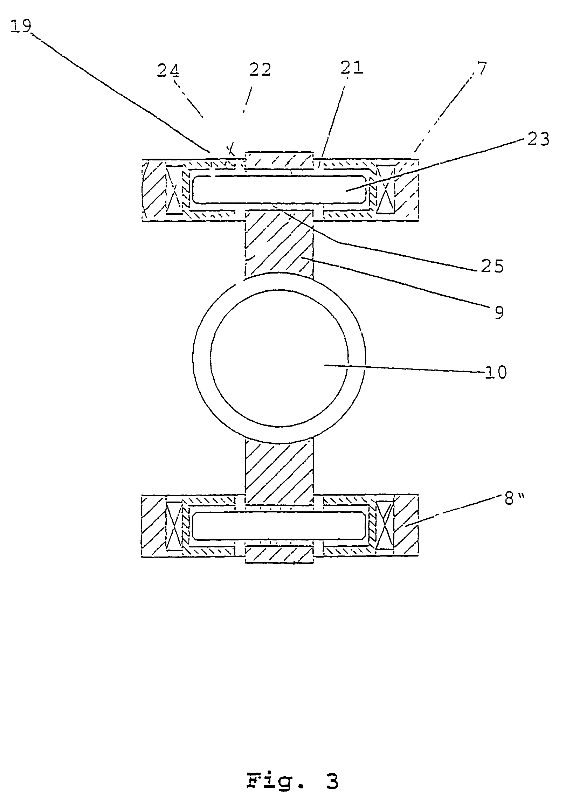

Die Verbindung der Arme der Schwenkglieder mit den Radträgern durch das erfindungsgemäße Koppelelement ist in Fig. 3 in einer Teilansicht detailliert gezeigt. Mit 7 und 8" sind die Arme des jeweiligen Schwenkgliedes, die den Radträger 9 mit dem Reibrad 10 stützen, benannt. Das Koppelelement 19 weist eine Bohrung 21 durch den Arm 7 des Schwenkgliedes auf, in das der Radträger 9 hineinragt. Innerhalb des Armes des Schwenkgliedes ist ein Langloch 22 vorgesehen, das in Längsrichtung des Armes verläuft. Ein Bolzen 23 verläuft durch eine Bohrung 24 im Endbereich des Radträgers und ist zusätzlich innerhalb des Langloches 22 gelagert. Innerhalb der Bohrung 24 in dem Radträger 9 ist der Bolzen 23 durch eine Kugelführung 25 beweglich angeordnet. Außerdem wird der Bolzen 23 innerhalb des Langlochs 22 an den Seiten durch die Wände des Langloches gestützt, ist jedoch nach oben und unten beweglich. Der Träger 9 ist in analoger Weise am Arm 8" angebracht.

Durch die seitliche Führung des Bolzens an den Flächen der Langlöcher kann die Auslenkung der Reibräder zusätzlich zur Steuerung über die Hydraulikeinrichtung synchronisiert werden. Mit Hilfe des durch die Langlöcher vorgesehenen Spiels kann eine Ausgleichsbewegung in linearer Richtung axial zu den Radträgern erfolgen. Insgesamt wird durch das Koppelelement der vorliegenden Erfindung die Stabilität des Verstellverhaltens des Toroidgetriebes deutlich verbessert.

### Bezugszeichen

- 1: sternförmiges Stützelement
- 2, 2', 2": Schwenkglieder
- 3: Führungsachse
- 4: Schraube
- 5: Mittelöffnung
- 6: Scheibenstützwelle
- 7, 7', 7'': Arme der Schwenkglieder
- 8, 8', 8'': Arme der Schwenkglieder
- 9, 9', 9'': Radträger
- 10, 10', 10": Reibräder
- 11: Stützwelle
- 12: Mittelbohrung der Stützwelle
- 13: exzentrische Bohrung
- 14: Nadellager
- 15: Nadellager
- 16: Kugellager
- 17: Hydraulikkolben
- 18: Bohrung
- 19: Koppelelement
- 20: Kugellager
- 21: Bohrung
- 22: Langloch
- 23: Bolzen
- 24: Bohrung
- 25: Kugelführung

## Patentansprüche

1. Stufenloses Toroidgetriebe mit einer Eingangswelle (6) zu der koaxial wenigstens eine toroidförmige Eingangscheibe und wenigstens eine toroidförmige Ausgangscheibe angeordnet ist, wobei zwischen den Innenflächen der Eingangs- und Ausgangsscheibe an Schwenkgliedern (2, 2', 2") eines Stützelements (1) mehrere von Radträgern (9, 9', 9") gehaltene Reibräder (10, 10', 10") schwenkbar gelagert sind und die Schwenkglieder eine Verstelleinrichtung zur Übertragung eines Drehmoments von der Eingangsscheibe auf die Ausgangsscheibe durch die Reibräder aufweisen, **dadurch gekennzeichnet, dass** die Radträger (9, 9', 9") der Reibräder (10, 10', 10") mit den Schwenkgliedern (2, 2', 2") durch ein Koppelelement (19) verbunden sind, wobei das Koppelelement (19) eine Kugelführung (25) mit einem Langloch (22) für eine Bewegung in linearer Richtung entlang der Achse des zugehörigen Radträgers (9, 9', 9") zum Durchführen einer Ausgleichsbewegung entlang der Achse aufweist.

2. Toroidgetriebe nach Anspruch 1, **dadurch gekennzeichnet, dass** das Koppelelement (19) in einem Toroidgetriebe in Drei-Roller-Bauweise einsetzbar ist.

3. Toroidgetriebe nach Anspruch 1 oder 2, **dadurch gekennzeichnet, dass** eine Hydraulikeinrichtung (17) für eine Synchronisierung einer Auslenkbewegung der Reibräder (9, 9', 9") vorgesehen ist.

4. Toroidgetriebe nach einem der Ansprüche 1 bis 3, **dadurch gekennzeichnet, dass** in den Koppelelementen (19) Bolzen (23) vorgesehen sind, die zur Synchronisierung seitlich an die Fläche der Langlöcher (22) anpressbar sind.

## Claims

1. Infinitely variable toroidal drive having an input shaft (6) in relation to which at least one toroidal input disk and at least one toroidal output disk are coaxially disposed, wherein between the inner surfaces of the input and output disk a plurality of friction wheels (10, 10', 10") held by wheel carriers (9, 9', 9") are pivotably supported on swivel elements (2, 2', 2") of a support element (1) and the swivel elements comprise an adjusting device for transmitting a torque from the input disk to the output disk through the friction wheels, **characterized in that** the wheel carriers (9, 9', 9") of the friction wheels (10, 10', 10") are connected to the swivel elements (2, 2', 2") by a coupling element (19), wherein the coupling element (19) comprises a ball guide (25) having an oblong hole (22) for a movement in linear direction along the axis of the associated wheel carrier (9, 9', 9") in order to effect a compensating movement along the axis.

2. Toroidal drive according to claim 1, **characterized in that** the coupling element (19) is usable in a toroidal drive of a three-roller design.

3. Toroidal drive according to claim 1 or 2, **characterized in that** a hydraulic device (17) is provided for synchronization of a deflection movement of the friction wheels (9, 9', 9").

4. Toroidal drive according to one of claims 1 to 3, **characterized in that** in the coupling elements (19) bolts (23) are provided, which for synchronization are pressable laterally against the surface of the oblong holes (22).

## Revendications

1. Transmission toroïdale à variation continue avec un arbre d'entrée (6) sur lequel est disposé, de manière coaxiale, au moins un disque d'entrée de forme toroïdale et au moins un disque de sortie de forme toroïdale, plusieurs roues de friction (10, 10', 10") maintenues par des supports de roues (9, 9', 9") étant logées de manière pivotante entre les surfaces internes du disque d'entré et du disque de sortie sur des organes de pivotement (2, 2', 2") d'un élément d'appui (1), et les organes de pivotement comprenant un dispositif de réglage pour la transmission d'un couple du disque d'entrée vers le disque de sortie par l'intermédiaire des roues de friction, **caractérisée en ce que** les supports de roues (9, 9', 9") des roues de friction (10, 10', 10") sont reliés aux organes de pivotement (2, 2', 2") par l'intermédiaire d'un élément de couplage (19), cet élément de couplage (19) comprenant un guidage à billes (25) avec un trou oblong (22) pour un mouvement linéaire le long de l'axe des supports de roue (9, 9', 9") afin d'obtenir un mouvement de compensation le long de l'axe.

2. Transmission toroïdale selon la revendication 1, **caractérisée en ce que** l'élément de couplage (19) peut être utilisé dans une transmission toroïdale avec une conception à trois rouleaux.

3. Transmission toroïdale selon la revendication 1 ou 2, **caractérisée en ce qu'**un dispositif hydraulique (17) est prévu pour la synchronisation du mouvement de pivotement des roues de friction (9, 9', 9").

4. Transmission toroïdale selon l'une des revendications 1 à 3, **caractérisée en ce que**, dans les éléments de couplage (19), se trouvent des tiges (23) qui peuvent être comprimées latéralement sur la surface des trous oblongs (22) pour la synchronisation.
